# EUROPEAN PATENT SPECIFICATION

(11) **EP 1 432 105 B1**
(45) Date of publication and mention of the grant of the patent: **20.02.2008**
(21) Application number: 03257971.6
(22) Date of filing: 17.12.2003
(51) Int. Cl.: H02K 23/58, H02K 3/47

(54) **Coreless Motor**
Kernloser Motor
Moteur sans noyau

(30) Priority: 17.12.2002 JP 2002365327
(43) Date of publication of application: 23.06.2004
(73) Proprietor: Kabushiki-Kaisha Asaba, Tokyo 130-0013 (JP)
(72) Inventor: Asaba, Keisuke, c/o Kabushiki-kaisha Asaba, Sumida-ku, Tokyo 130-0013 (JP)
(74) Representative: Johnstone, Douglas Ian

(56) References cited:
- EP-A- 1 176 694
- AT-B- 337 303
- DE-A1- 2 404 059
- JP-A- 3 045 153
- JP-A- 57 031 365
- JP-A- 58 112 453
- US-A- 5 793 133
- US-E- R E30 761

## Description

This invention relates to a coreless motor suitable for use as a driving force for precision equipment.

A small-sized motor used as an actuator for precision equipment has conventionally contained a coreless motor in which a coil circulates around a magnet. Its merits are: that it is free from reluctance torque that occurs in a cored motor (motor with an iron core); that commutation sparks are few and electric noise is little; and that the rotor inertia is small and responsiveness is consequently excellent, among other characteristics.

It is a matter of course that a motor for driving precision equipment must be excellent in responsiveness and controllability. In the case of precision equipment having many motors, furthermore, each motor is required to consume little electric power and to have high energy efficiency.

Although the conventional coreless type motor is excellent in responsiveness and controllability, it also has a shortcoming of not necessarily being characterized by high energy efficiency for the reasons explained below.

The conventionally used coreless motor is of the type in which a cylindrical coil is revolved in a gap between a magnet and a coil yoke. Rotating torque working on the coil arises in the direction that constitutes a right angle with the lead wire of the coil; as such, if the direction of the lead wire of the coil (direction of wiring) is arranged to be at a right angle to the coil revolution circumferential direction, the rotating torque (rotational output) in relation to the strength of a magnetic field formed by the coil will rise, so that a motor featuring high efficiency can be obtained.

However, a cylindrical coil is so composed that the lead wire constituting the coil is not wound so as to be parallel with the elevation or height of the coil but designed to have some degree of inclination angle, such that when the inclination angle becomes large, the rotating torque working on the magnet reduces, lowering energy efficiency.

If the axial direction length is shortened in such a motor, therefore, the angle formed by the coil winding direction with the coil axis direction will become larger, and energy efficiency will accordingly decline further, which poses a barrier in realizing small-sized high-efficiency motors.

JP 57 031365 A discloses a coreless motor having a casing, a ring-shaped stationary magnet and a rotor. The rotor comprises multiple conductive coils and the coils are designed to revolve jointly with a rotation spindle following power input to the coils. Each coil is made up of a lead wire extending from one lead wire end to its other end, the lead wire defining a continuous hollow unit. Each coil has a lower flat portion and a smaller upper flat portion with a side portion in-between. The lower flat portion confronts a lower face of the magnet and the side portions of the coils confront an external circumferential side face of the magnet. A sheet-shaped flange is installed on a lower part of a coil holder fixed to a periphery of the rotation spindle and the multiple coils are attached to the coil holder by fixing the lower flat portions of the coils to the flange. A magnetic: ring is attached to the upper flat portions of the coils.

The object of this invention is to realize a small-sized coreless motor with excellent responsiveness and controllability, which is capable of producing improved rotating torque for a given driving electric power supplied to the coil and featuring great compactness, ease of assembly and high energy efficiency.

To attain the said object, the coreless motor of claim 1 comprises:
a casing;
a ring-shaped stationary magnet;
multiple conductive coils, the coils being designed to revolve jointly with a rotation spindle following power input to the coils, each coil consisting of an upper and a lower flat portion and at least one further portion, the lower flat portion confronting a lower face of the magnet and the further portions of the coils confronting an external circumferential side face of the magnet, and each coil being made up of a lead wire from one lead wire end to its other end, the lead wire defining a continuous hollow unit;
a sheet-shaped flange installed on a lower part of a coil holder fixed to a periphery of the rotation spindle, the multiple coils being attached to the coil holder by fixing the flat portion on the lower side of each coil to the flange; and
a round annular upper-side reinforcing plate being attached to the flat portion on the upper side of each coil, characterized in that:
   the cordless motor includes a ring-shaped coil yoke fitted to the interior of the casing;
   the multiple coils are attached to the coil holder so as to be aligned with the circumferential direction of the magnet;
   the two flat portions of each coil are of a planar arcuate form, the upper portion confronting an upper face of the magnet;
   the at least one further portion of each coil comprises two curved-and-folded portions which confront the external circumferential side face of the magnet; and
   the cordless motor includes an annular ring-shaped lower-side reinforcing plate below the lower side flat portions of the coils, which lower-side reinforcing plate is fixed to a lower face of the coil holder flange, the lower-side flat portion of each coil being situated and fixed in a gap between the flange and the lower-side reinforcing plate.

The coreless motor of claim 2 is so composed that the lower-side reinforcing plate is held parallel with the flange by means of a spacer, the thickness of which is substantially equal to the thickness of the flat portion on the lower side of the coil, and the gap is formed by the spacer.

The coreless motor of claim 3 is so composed that the upper-side reinforcing plate is made of conductive material; that one end of each coil is linked to the upper-side reinforcing plate; that the other end of each coil is connected to a commutator formed around the rotation spindle and is positioned below the coil holder.

The coreless motor of claim 4 is so composed that the magnet,has four-pole-magnetization arranged in a radial direction, and three coils are installed around the rotation spindle; and wherein a six-segment commutator is fixed around the rotation spindle and two brushes contact the commutator at positions separated by an angle of 90 DEG in relation to the commutator.

The coreless motor of claim 5 is so composed that the magnet has two-pole-magnetization arranged in a radial direction, and three coils are installed around the rotation spindle, and wherein a three-segment commutator is fixed around the rotation spindle and contacted by two brushes which are parallel with each other.

The coreless motor of claim 6 is so composed that the magnet is fixed to an external circumference of a ring-shaped magnet holder, including a cylindrical portion at its upper part holding a bearing, the cylindrical portion being inserted into, and fitted to, a boss formed in the centre of a top panel of the case, the rotation spindle being supported for rotation by the bearing installed within the cylindrical portion.

The coreless motor of claim 7 is configured such that its magnet holder has a dented or recessed portion on its lower side, and an upper portion of the coil holder is received in the recessed portion of the magnet holder.

The coreless motor of claim 8 is one in which the interior surface of the coil yoke is shaped to match an external circumferential side face and upper/lower faces of the coil, and the coil yoke is formed by bonding together an upper half portion of the coil yoke that contains an upper half of the coil and a lower half portion that contains a lower half of the coil.

The coreless motor of claim 9 is one wherein the magnet is composed of four arc-shaped magnets, individually magnetized in the radial direction, arranged in a ring form.

Further features of the present invention will become apparent to those skilled in the art to which the present invention relates from reading the following specification with reference to the accompanying drawings, in which:
Fig.1 is a vertical cross-section diagram showing an embodiment of the motor relating to this invention;
Fig. 2 is a lateral cross-section diagram showing an embodiment of the motor relating to this invention;
Fig. 3 is an oblique view of the coil;
Fig. 4 is a schematic diagram illustrating the relationship between the commutators and brushes in the 1^{st} embodiment;
Fig. 5 is a time chart for electric conduction in the coils in the 1^{st} embodiment;
Fig. 6 is a perspective sectioned view of the yokes parts of the 1^{st} embodiment;
Fig. 7 is a schematic diagram showing the relationship between the commutators and brushes in a 2^{nd} embodiment;
Fig. 8 is a time chart for electric conduction in the coils in the 2^{nd} embodiment; and
Fig. 9 is a plan for a magnet when it is composed of four arcuate magnets.

Hereunder, an embodiment of a coreless motor according to this invention is explained, based on a specific example shown in the attached figures.

A casing 1 is formed as a cylinder, the lower end of which is open, while at the centre of a top panel 1a of the casing there is a cylindrical boss 2, having a centre hole the upper and lower ends of which may be open. A magnet holder 6 with a ring-shaped magnet 5 on its external circumference is arranged concentrically with a rotation spindle 4. A cylindrical portion 6a of the magnet holder 6 is mounted in the vertical centre hole in the cylindrical boss 2, with the rotation spindle 4 supported for rotation by two (upper and lower) rows 3 of bearings.

The magnet 5 is, for example a four-pole magnet magnetized in the radial direction with upper and lower faces and an external circumferential side face opposed to an internal circumferential face of a coil yoke 7, situated on the internal circumferential face of the casing 1, with a suitable gap inbetween. In this gap conductive power coils 8 are installed which do not contact the magnet 5 or the coil yoke 7.

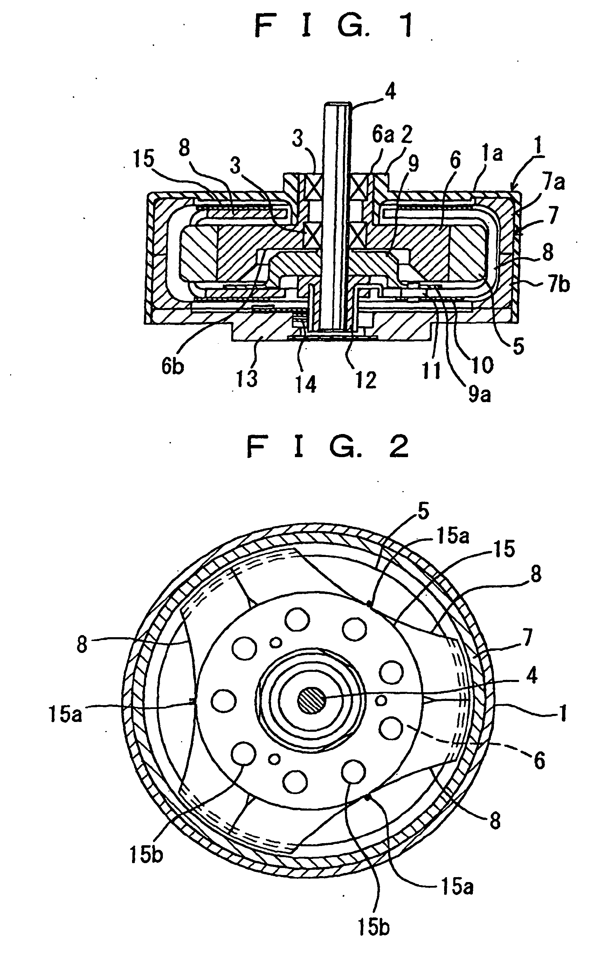

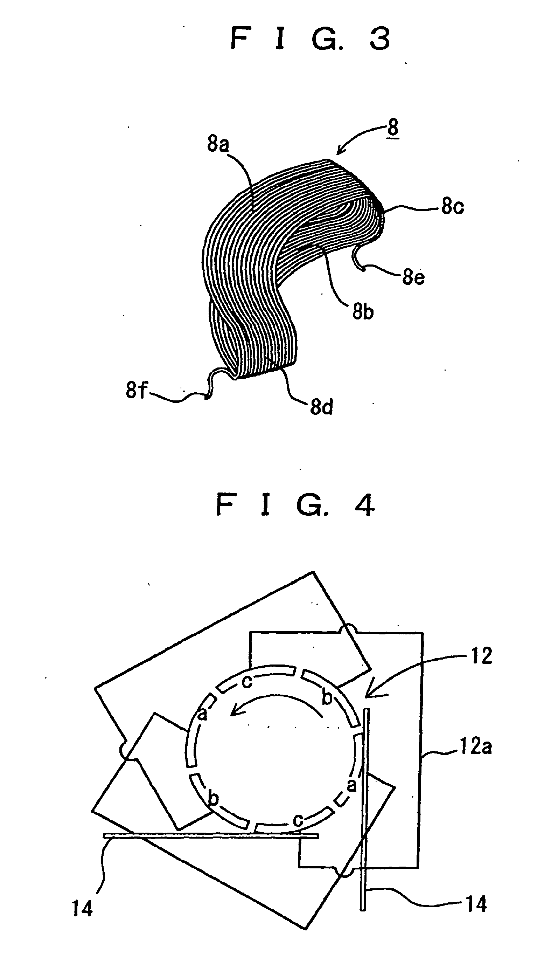

Each coil has, as shown in Fig. 3, upper and lower flat portions 8a, 8b, which confront the upper and lower faces of the magnet 5, and curved-and-folded portions 8c, 8d which confront the external circumference side face of the magnet, while the flat portions 8a, 8b are so configured that each of their planar parts take the form of an arc, with the wire between one end 8e of the lead wire to the other end 8f of being formed as continuous hollow coils; thus, multiple coils (three units in the case of Fig. 2) are arranged side by side in the external circumferential direction of the magnet, in such a manner that their flat portions are opposed to the upper and lower faces of the magnet 5, while their curved-and-folded portions are opposed to the external circumferential side faces of the magnet.

The internal face of each coil is aligned with the upper and lower faces and the external circumferential side face of the magnet 5, so that the distance between the mutually confronting portions of the coil and magnet is constant.

Furthermore, the coils 8 are supported, with their lower flat portions 8b sandwiched by the lower face of a flange 9a, which is formed on the lower part of a coil holder 9, which is an almost round plate form and fixed to the periphery of the aforesaid rotation spindle 4, and lower-side reinforcing plate 10. To be more precise, lower-side reinforcing plate 10 is attached to flange 9a by means of a spacer 11 and the lower-side flat portions 8b of the coils are inserted into a gap between the lower-side reinforcing plate 10 and the flange 9a, and fixed in that position by means of adhesive, additive or the like.

The spacer 11 is so arranged that positional alignment can be achieved by contacting the peripheral part of the coil when attaching the coils 8 to the coil holder 9, whereby an improved manufacturing technique for the motor is possible.

The upper portion of the coil holder 9 is so configured that it will engage or be situated in the interior of a recessed portion 6b formed in a lower side of the magnet holder 6. With this arrangement, the height (thickness) of the motor in the axial direction can be reduced.

Furthermore, an annular ring-shaped upper-side reinforcing plate 15 is adhered to the upper faces of flat portions 8a on the tops of the coils. This upper-side reinforcing plate is made of a conductive metal sheet, with wire connection protrusions 15a formed at three points on its external circumference, as shown in Fig. 2, so that it will be possible to effect electrical connection between the coils by linking an end of each coil to a respective protrusion.

Each wire connection protrusion has a dented portion designed to sandwich a coil lead wire, so that it is possible to put the lead wire into the dented portion and solder the wire easily.

In addition, around the rotation spindle in the lower central part of the coil holder 9, a commutator 12 is installed, and of the two ends of the lead wire that constitutes each coil, the one not connected to the upper-side reinforcing plate can be linked to this commutator, so that contact can be made via the brush 14 with a lid plate 13, which also serves as a brush support closing the lower part of an opening of the casing 1.

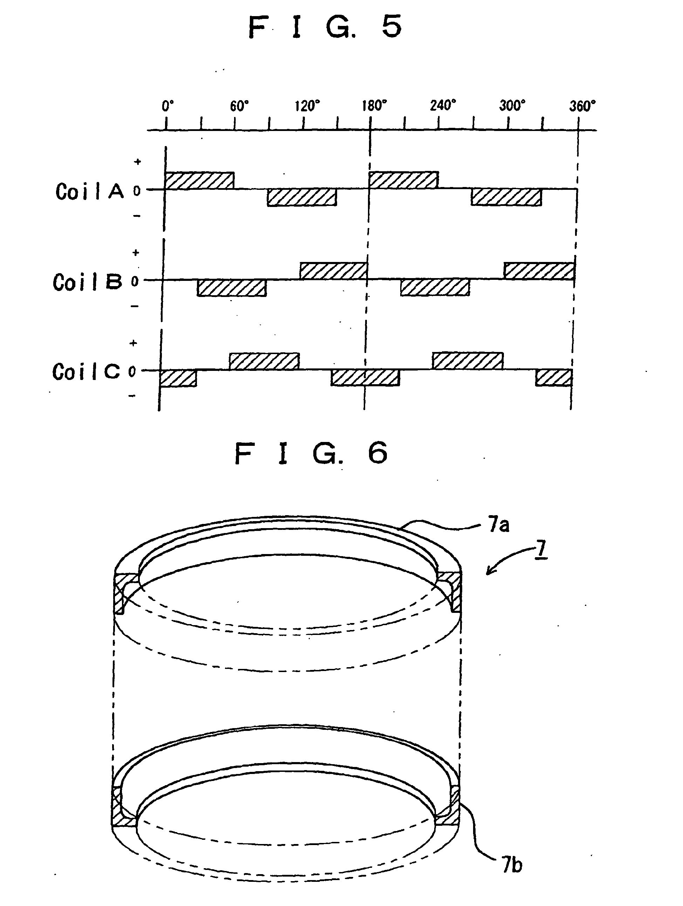

The commutator 12 is made of six segments, as shown in Fig. 4, with two confronting terminals connected to one end of the same coil. The brushes 14 are installed at positions whereby they contact the commutator terminals at positions spaced apart by 90° in relation to the commutator. The two brushes are designed to be individually connected to two of the six commutator terminals. Accordingly, the conductive time chart for the three coils will be as indicated in Fig. 5.

In Figs. 4 and 5, symbols A, B and C are allotted to the three coils for differentiation purposes, and symbols a, b and c designate the terminals linked with the individual coils, to show the corresponding relationship between the terminals and coils. Further, symbol 12a in Fig. 4 represents a conductive circuit designed to connect terminals installed in opposite positions. Although the circuit is shown with a thick line, in fact it is composed of metal sheets or coated lead wires laid on the wire connection panels of the commutator.

The plane part of the coil yoke 7 is ring shaped and its internal shape is so arranged that the external circumferential side face and upper/lower faces of the magnet 5 are enclosed from outside in the radial direction. The internal face thus forms an concave shape following the shape of the exterior circumferential side face and upper/lower faces of the magnet. As shown in Fig. 6, the coil yoke 7 is composed of an upper half portion 7a and a lower half portion 7b.

The coil yoke 7 consists of the upper half portion 7a and the lower half portion 7b, which are fabricated by press shaping magnetic material, such as iron, for instance. The upper half portion 7a may be made of the same material as that of the casing 1 and unified with it into a single or monolithic unit.

In a motor composed as stated above, a rotational driving force arises around the axis of the coil upon power input to coils 8 from brush 14 and commutator 12, causing the revolution of coils 8 coils holder 9 and rotation spindle 4, which is the output spindle.

In the motor of this invention, lead wires comprising the coils form substantially a right angle with the revolving direction of the coil, and in addition, coil 8 surrounds not only the external circumferential face of magnet 5 but also its upper/lower faces. The coil yoke 7 covers not only the external circumferential face but also the upper/lower faces of the coil, so that most of the magnetic flux radiated from the magnet is led to the coil yoke. Accordingly the ratio of the consumption of driving electric power to the rotational driving torque of the rotation spindle 4, which is the motor output, can be small, such that an excellent motor capable of driving at a low electric power and characterized by high energy efficiency can be obtained.

Next, the process for assembling the motor of the aforementioned embodiment will be explained.

First, fix lower-side reinforcing plate 10 to flange 9a of coil holder 9 by means of spacer 11, and spindle 4 is forcibly pushed into the central vertical hole of the coil holder 9 and fixed in that state, while commutator 12 is fitted to the spindle 4.

Then, around part of the spindle 4 which extends above the coil holder 9, lower-side bearing 3, magnet holder 6 and upper-side bearing 3 are fitted in this order and fixed there. The magnet 5 is attached in advance around the magnet holder 6.

Subsequently, lower-side flat portion 8b of coils 8 are inserted between the aforementioned flange 9a and lower-side reinforcing plate 10 and fixed there with adhesive, and upper-side reinforcing plate 15 is attached and fixed to upper-side flat portions 8a of the coils, while one end of the lead wire of each coil is linked to the upper-side reinforcing plate, with the other end connected to a terminal of the commutator.

Next, upper half portion 7a of coil yoke 7 is attached to the interior of casing 1, while cylindrical portion 6a of magnet holder 6 is inserted into and fitted to cylindrical boss 2. This should be followed by attaching lower-half portion 7b of the coil yoke and covering the lower opening part of the casing by means of lid plate 13, which also serves as a brush support for the final completion of the motor.

In the case of the motor in the first embodiment, magnet 5 is designed as a four-pole one, but the magnet could alternatively be a two-pole one magnetized in the diametral direction. For the latter, output properties such as torque constant, are slightly inferior to those of the four-pole magnet, but compared with other motors of the same size, its output properties are better, with the added merit of using a lower number of parts thereby reducing the cost of the magnet.

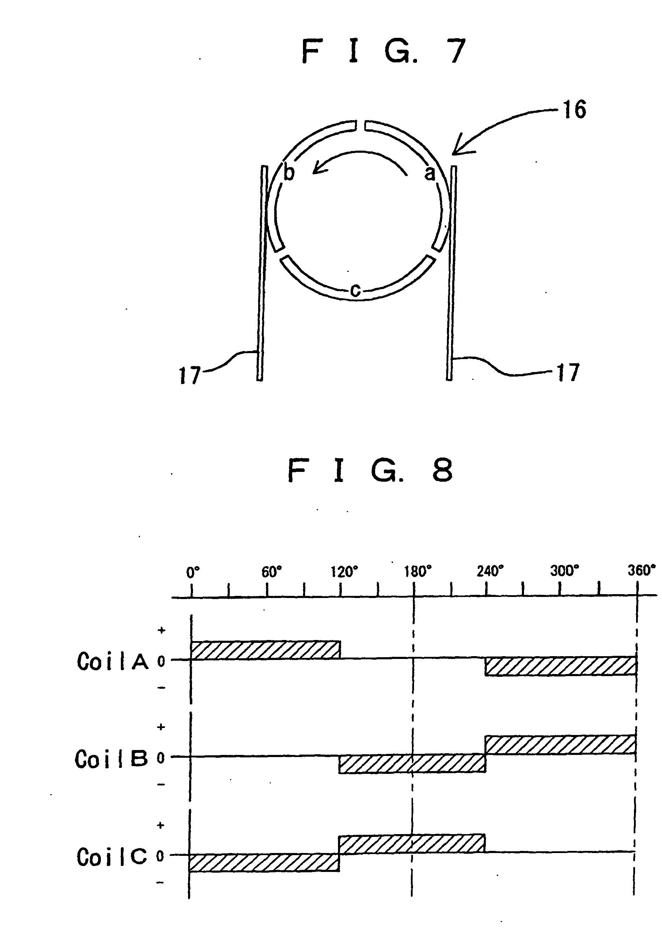

For the two-pole magnet arrangement mentioned above the commutator 16 has three segments such as those shown in Fig. 7. With this arrangement, two brushes 17 are arranged so as to be parallel with each other. The electrical conduction time chart for this embodiment is shown in Fig. 8.

When properties of the coreless motor of this invention characterized by four-pole-magnetization (embodiment 1) and the coreless motor with two-pole-magnetization (embodiment 2), configured as stated above, are examined, the results shown in Table 1 below are obtained.

In Table 1, the mark Φ in the size row designates the diameter of the casing, while L in the same row designates the height of the casing.

**[Table 1]**

| | The 1^{st} embodiment | The 2^{nd} embodiment |
|---|---|---|
| Sizeφ-L (mm) | φ41-17 | φ41-17 |
| Volume (mm³) | 22433 | 22433 |
| Rated voltage (V) | 12 | 12 |
| Startup current (mA) | 1065 | 960 |
| Non-load number of revolutions | 2300 | 3270 |
| Non-load current (mA) | 4 | 4.8 |
| Startup torque (mNm) | 53.2 | 33.2 |
| Torque constant (mNm/A) | 50.1 | 34.8 |
| Maximum output (W) | 3.17 | 2.85 |
| Maximum efficiency (%) | 88 | 86.3 |
| Mechanical time constant (ms) | 12 | 28 |

As shown in Table 1 above, both the 1^{st} embodiment and the 2^{nd} embodiment of this invention provide excellent startup torque, torque constant and in particular, maximum efficiency.

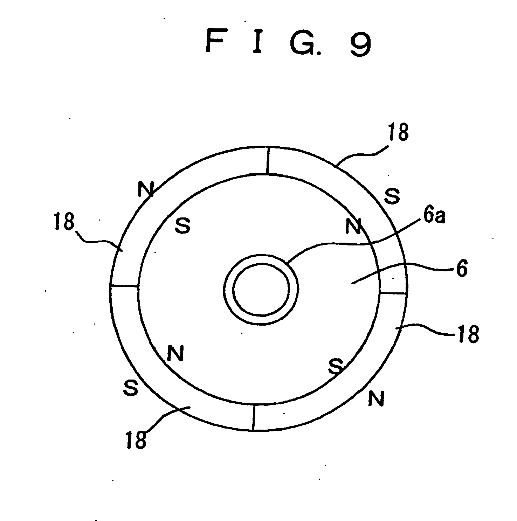

In the 1^{st} embodiment mentioned above, ring-shaped magnet 5, which is four-pole-magnetized in the radial direction, is used. As shown in Fig. 9, however, there may be a case in which four arc-shaped magnets 18 are arranged in the circumferential direction to make up one ring-shaped magnet.

Each aforementioned arc-shaped magnet 18 is magnetized in the radial direction. Based on this arrangement, it is possible to reduce the manufacturing cost of fabricating an aerotropic magnet having a strong magnetic force in comparison with producing a ring-shaped radial aerotropic magnet. Accordingly, this provides the great advantage of being able to reduce the cost of the magnet parts thereby reducing the cost of the motor parts.

The reason why a coreless motor is expensive is that, for its magnet, a product having a strong magnetic field must be used and such a product is expensive. Accordingly, the merit in the capability of reducing the parts cost of the magnet is very important in achieving a cost reduction for coreless motors.

As in the case of the embodiments described above, this invention relates to a coreless motor, which is equipped with brushes for power conduction to the coils. The method of controlling the motor in the 1^{st} embodiment, shown above, can be suitably applied to the brushless motor of the magnet revolution type. Namely, in the case of a brushless motor equipped with three coils and a four pole radial magnetization magnet, the aforementioned objective can be achieved by effecting the same electric conduction control as shown in the conductive time chart shown in Fig. 5 by using an electronic circuit, instead of the commutator and brushes as in the 1^{st} embodiment. To be specific, it should be arranged that the rotational position of the magnet will be detached by three pole sensors angularly spaced by 60° or 120° around the revolving orbit of the magnet. The conductive control will be carried out in accordance with signals from these pole sensors.

Regarding the motor of this invention, coils are installed so as to surround the external circumferential side face and upper/lower faces of the magnet, such that most of the magnetic flux from the magnet is guided to the coils. The ratio of the consumption of driving electric power to the rotation driving torque for the spindle, which is the output of the motor, can be small. As such, it is possible to obtain a motor, capable of driving at a low electric power and providing high energy efficiency.

Furthermore, each coil is composed of a winding portion whose flat part forms an arc shape and a winding portion confronting the external circumferential side face of the magnet, with the section from one end of the lead wire that composes such a coil to the other end constituting a continuous hollow unit. Accordingly, most portions of the lead wire that comprise the coil form a right angle with the circumferential direction of the magnet, namely the revolving direction of the coil. This allows effective utilization of magnetic flux from the magnet, which also helps obtain a motor providing high energy efficiency.

Moreover, the upper flat portion of each coil is held and fixed at its central part by the upper-side reinforcing plate, while the lower flat portion of the coil is held and fixed at its central part by the coil holder flange and the lower-side reinforcing plate. Because of this arrangement, sufficient rigidity can be achieved even if a centrifugal force arises due to the revolution of the coil. There is little danger of coil deformation occurring during revolution of the coil. Thus, it is possible to enhance the reliability of the motor.

In addition, the coil yoke is so designed that its internal face follows the shape of the external circumferential side face and upper/lower faces of the coils, such that: the magnetic flux from the magnet is effectively led to the coil yoke; the magnetic resistance is small; rotational unevenness rarely occurs; and therefore, significantly smooth and stabilized revolving output can be obtained.

When the magnet is so composed in an arc-shape, furthermore, it is possible to obtain a magnet with a strong magnetic force at a low price, such that cost reduction of the motor can be expected.

The coil confronts the upper and lower faces of the magnet and consists of a flat portion having a plane part of an arcuate form and a curved-and-folded portion forming a winding unit confronting the external circumferential side face of the magnet and the section from one end of a lead wire making up these winding units to its other end constitutes a continuous hollow unit.

While particular embodiments of the present invention have been illustrated and described, it should be obvious to those skilled in the art that various changes and modifications can be made without departing from the scope of the claims.

## Claims

1. A coreless motor comprising:
a casing (1);
a ring-shaped stationary magnet (5);
multiple conductive coils (8), the coils (8) being designed to revolve jointly with a rotation spindle (4) following power input to the coils (8), each coil (8) consisting of an upper and a lower flat portion (8a, 8b) and at least one further portion, the lower flat portion (8b) confronting a lower face of the magnet (5) and the further portions of the coils (8) confronting an external circumferential side face of the magnet (5), and each coil (8) being made up of a lead wire from one lead wire end (8e) to its other end (8f), the lead wire defining a continuous hollow unit;
a sheet-shaped flange (9a) installed on a lower part of a coil holder (9) fixed to a periphery of the rotation spindle (4), the multiple coils (8) being attached to the coil holder (9) by fixing the flat portion (8b) on the lower side of each coil to the flange (9a); and
a round annular upper-side reinforcing plate (15) being attached to the flat portion (8a) on the upper side of each coil (8), **characterized in that**:
the cordless motor includes a ring-shaped coil yoke (7) fitted to the interior of the casing (1);
the multiple coils (8) are attached to the coil holder (9) so as to be aligned with the circumferential direction of the magnet (5);
the two flat portions (8a, 8b) of each coil (8) are of a planar arcuate form, the upper portion (8a) confronting an upper face of the magnet (5);
the at least one further portion of each coil (8) comprises two curved-and-folded portions (8c, 8d) which confront the external circumferential side face of the magnet (5); and
the cordless motor includes an annular ring-shaped lower-side reinforcing plate (10) below the lower side flat portions (8b) of the coils (8), which lower-side reinforcing plate (10) is fixed to a lower face of the coil. holder flange (9a), the lower-side flat portion (8b) of each coil being situated and fixed in a gap between the flange (9a) and the lower-side reinforcing plate (10).

2. The coreless motor as claimed in claim 1, wherein the lower-side reinforcing plate (10) is spaced from the coil holder flange (9a), so as to be parallel with the flange (9a), by means of a spacer (11), the thickness of which is substantially equal to the thickness of the lower-side flat portion (8b) of one said coil (8), and the gap is formed by the spacer (11).

3. The coreless motor as claimed in claim 1 or 2, wherein the upper-side reinforcing plate (15) consists of conductive material, and one end of each coil (8) is linked to this upper-side reinforcing plate (15), and the other end of the coil (8) is connected to a commutator (12) installed around the rotation spindle (4) in a lower portion of the coil holder (9).

4. The coreless motor as claimed in claim 1 or 2, wherein
the magnet (5) has four-pole-magnetization arranged in a radial direction, and three coils (8) are installed around the rotation spindle (4); and
the coreless motor includes a six segment commutator (12) fixed around the rotation spindle (4) and two brushes (14) contacting the commutator (12) at positions separated by an angle of 90° in relation to the commutator (12).

5. The coreless motor as claimed in claim 1 or 2, wherein
the magnet (5) has two-pole-magnetization arranged in a radial direction, and three coils (8) are installed around the rotation spindle (4); and
the coreless motor includes a three segment commutator (12) fixed around the rotation spindle (4) and two brushes (17) which are parallel with each other.

6. The coreless motor as claimed in any preceding claim, wherein the magnet (5) is fixed to an external circumference of a ring-shaped magnet holder (6) with a cylindrical portion (6a) at its upper part holding a bearing (3) with the cylindrical portion (6a) being engaged with, and fitted to, a boss (2) formed in the centre of a top panel (1a) of the casing (1), and the rotation spindle (4) is supported for rotation by the bearing (3) installed within the cylindrical portion (6a).

7. The coreless motor as claimed in claim 6, wherein the magnet holder (6) has a recessed portion (6b) on its lower side, and an upper portion of the coil holder (9) is received in the recessed portion (6b) of the magnet holder (6).

8. The coreless motor as claimed in any preceding claim, wherein an internal surface of the coil yoke (7) is shaped to match the external circumferential side face and upper/lower faces of the coils (8), and the coil yoke (7) is formed by bonding together an upper half portion (7a) of the coil yoke (7) that contains an upper half of each coil (8) and a lower half portion (7b) that contains a lower half of each coil (8).

9. The coreless motor as claimed in any preceding claim, wherein the magnet (5) is composed of four arc-shaped magnets (18), individually magnetized in the radial direction arranged in a ring form.

## Patentansprüche

1. Kernloser Motor, enthaltend:
ein Gehäuse (1);
einen ringförmigen feststehenden Magnet (5);
mehrere leitende Spulen (8), welche Spulen (8) so gestaltet sind, dass sie gemeinsam mit einer Drehspindel (4) einer Leistungseinspeisung in die Spulen (8) folgend rotieren, wobei jede Spule (8) aus einem oberen und einem unteren flachen Abschnitt (8a, 8b) und mindestens einem weiteren Abschnitt besteht, wobei der untere flache Abschnitt (8b) einer unteren Fläche des Magnets (5) gegenüberliegt und die weiteren Abschnitte der Spulen (8) einer äußeren Umfangsseitenfläche des Magnets (5) gegenüberliegen und jede Spule (8) aus einem Zuleitungsdraht von einem Zuleitungsdrahtende (8e) zu seinem anderen Ende (8f) gebildet ist, welcher Zuleitungsdraht eine durchgehende hohle Einheit bildet;
einen plattenförmigen Flansch (9a), der an einem unteren Teil eines am Umfang der Drehspindel (4) befestigten Spulenhalters (9) angebracht ist, wobei die Vielzahl der Spulen (8) an dem Spulenhalter (9) durch Befestigung des flachen Abschnitts (8b) an der Unterseite jeder Spule an dem Flansch (9a) angebracht ist; und
eine runde ringförmige Oberseiten-Verstärkungsplatte (15), die an dem flachen Abschnitt (8a) an der Oberseite jeder Spule (8) angebracht ist, **dadurch gekennzeichnet, dass**:
der kernlose Motor ein ringförmiges Spulenjoch (7) umfasst, das in das Innere des Gehäuses (1) eingesetzt ist;
die Vielzahl der Spulen (8) an dem Spulenhalter (9) so angebracht ist, dass sie mit der Umfangsrichtung des Magnets (5) ausgerichtet sind;
die beiden flachen Abschnitte (8a, 8b) jeder Spule (8) eine ebene Bogenform haben, wobei der obere Abschnitt (8a) einer oberen Fläche des Magnets (5) gegenüberliegt;
der mindestens eine weitere Abschnitt jeder Spule (8) zwei gekrümmte und umgeschlagene Abschnitte (8c, 8d) aufweist, die der äußeren Umfangsseitenfläche des Magnets (5) gegenüberliegen; und
der kernlose Motor eine ringförmige Unterseiten-Verstärkungsplatte (10) unter den flachen Abschnitten (8b) an der Unterseite der Spulen (8) umfasst, welche Unterseiten-Verstärkungsplatte (10) an einer unteren Fläche des Spulenhalterflansches (9a) befestigt ist, wobei der flache Abschnitt (8b) an der Unterseite jeder Spule in einem Spalt zwischen dem Flansch (9a) und der Unterseiten-Verstärkungsplatte (10) gelegen und befestigt ist.

2. Kernloser Motor nach Anspruch 1, bei welchem die Unterseiten-Verstärkungsplatte (10) von dem Spulenhalterflansch (9a) dergestalt, dass sie mit dem Flansch (9a) parallel ist, mittels eines Abstandhalters (11) beabstandet ist, dessen Dicke im wesentlichen gleich der Dicke des flachen Abschnitts (8b) an der Unterseite einer Spule (8) ist, und wobei der Spalt durch den Abstandhalter (11) gebildet ist.

3. Kernloser Motor nach Anspruch 1 oder 2, bei welchem die Oberseiten-Verstärkungsplatte (15) aus leitfähigem Material besteht und ein Ende jeder Spule (8) mit dieser Oberseiten-Verstärkungsplatte (15) verbunden ist und das andere Ende der Spule (8) mit einem Kommutator (12) verbunden ist, der um die Drehspindel (4) in einem unteren Abschnitt des Spulenhalters (9) eingebaut ist.

4. Kernloser Motor nach Anspruch 1 oder 2, bei welchem
der Magnet (5) eine in radialer Richtung angeordnete vierpolige Magnetisierung hat und drei Spulen (8) um die Drehspindel (4) eingebaut sind; und
der kernlose Motor einen Kommutator (12) mit sechs Segmenten umfasst, der um die Drehspindel (4) befestigt ist, sowie zwei Bürsten (14), die den Kommutator (12) an Positionen berühren, die in Bezug auf den Kommutator (12) in einem Winkel von 90° beabstandet sind.

5. Kernloser Motor nach Anspruch 1 oder 2, bei welchem der Magnet (5) eine in radialer Richtung angeordnete zweipolige Magnetisierung hat und um die Drehspindel (4) drei Spulen (8) eingebaut sind; und
der kernlose Motor einen Kommutator (12) mit drei Segmenten umfasst, der um die Drehspindel (4) befestigt ist, sowie zwei Bürsten (17), die parallel zueinander sind.

6. Kernloser Motor nach einem der vorstehenden Ansprüche, bei welchem der Magnet (5) an einem äußeren Umfang eines ringförmigen Magnethalters (6) befestigt ist, wobei ein zylindrischer Abschnitt (6a) an seinem oberen Teil ein Lager (3) hält, wobei der zylindrische Abschnitt (6a) mit einem in der Mitte einer oberen Verkleidung (1a) des Gehäuses (1) gebildeten Vorsprung (2) in Eingriff ist und darin eingesetzt ist und die Drehspindel (4) von dem in dem zylindrischen Abschnitt (6a) eingebauten Lager (3) drehbar gehalten ist.

7. Kernloser Motor nach Anspruch 6, bei welchem der Magnethalter (6) einen vertieften Abschnitt (6b) an seiner Unterseite hat und ein oberer Abschnitt des Spulenhalters (9) in dem vertieften Abschnitt (6b) des Magnethalters (6) aufgenommen ist.

8. Kernloser Motor nach einem der vorstehenden Ansprüche, bei welchem eine Innenfläche des Spulenjochs (7) so geformt ist, dass sie der äußeren Umfangsseitenfläche und der oberen/unteren Fläche der Spulen (8) entspricht, und das Spulenjoch (7) gebildet ist, indem ein oberer Hälftenabschnitt (7a) des Spulenjochs (7), der eine obere Hälfte jeder Spule (8) enthält, und ein unterer Hälftenabschnitt (7b), der eine untere Hälfte jeder Spule (8) enthält, miteinander verbunden werden.

9. Kernloser Motor nach einem der vorstehenden Ansprüche, bei welchem der Magnet (5) aus vier bogenförmigen Magneten (18) zusammengesetzt ist, die in radialer Richtung einzeln magnetisiert und in einer Ringform angeordnet sind.

## Revendications

1. Moteur sans noyau comprenant:
un carter (1);
un aimant stationnaire en forme d'anneau (5);
des bobines conductrices multiples (8), les bobines étant conçues pour tourner conjointement avec un axe de rotation (4) en fonction de la puissance qui alimente les bobines (8), chaque bobine (8) consistant en une partie plate supérieure et inférieure (8a, 8b) et en au moins une autre partie, la partie plate inférieure (8b) étant opposée à une face'inférieure de l'aimant (5), et les autres parties des bobines (8) étant opposées à une face latérale circonférentielle externe de l'aimant (5), et chaque bobine (8) -étant constituée d'un fil de connexion entre une extrémité du fil de connexion (8e) et son autre extrémité (8f), le fil de connexion définissant une unité creuse continue ;
un flasque en forme de tôle (9a), installé sur une partie inférieure d'un porte-bobines (9), fixé à une périphérie de l'axe de rotation (4), les bobines multiples (8) étant attachées au porte-bobines (9) en fixant au flasque (9a) la partie plate (8b) sur le côté inférieur de chaque bobine; et
une plaque de renfort du côté supérieur annulaire ronde (15) étant attachée à la partie plate (8a) sur le côté supérieur de chaque bobine (8), **caractérisé en ce que** :
le moteur sans noyau inclut un collier de bobine en forme d'anneau (7), qui est ajusté à l'intérieur du carter (1);
les bobines multiples (8) sont attachées au porte-bobines (9) de manière à être alignées avec la direction circonférentielle de l'aimant (5) ;
les deux parties plates (8a, 8b) de chaque bobine (8) ont une forme arquée planaire, la partie supérieure (8a) étant opposée à une face supérieure de l'aimant (5) ;
ladite au moins une autre partie de chaque bobine (8) comprend deux parties courbées et pliées (8c, 8d) qui sont opposées à la face latérale circonférentielle externe de l'aimant (5) ; et
le moteur sans noyau inclut une plaque de renfort du côté inférieur en forme d'anneau annulaire (10), en dessous des parties plates du côté inférieur (8b) des bobines (8), laquelle plaque de renfort du côté inférieur (10) est fixée à une face inférieure du flasque du porte-bobines (9a), la partie plate du côté inférieur (8b) de chaque bobine étant située et fixée dans un intervalle entre le flasque (9a) et la plaque de renfort du côté inférieur (10).

2. Moteur sans noyau selon la revendication 1, dans lequel la plaque de renfort du côté inférieur (10) est espacée du flasque de porte-bobines (9a) de manière à être parallèle au flasque (9a) au moyen d'une entretoise (11), dont l'épaisseur est sensiblement égale à l'épaisseur de la partie plate du côté inférieur (8b) de ladite bobine (8), et l'intervalle est formé par l'entretoise (11).

3. Moteur sans noyau selon la revendication 1 ou 2, dans lequel la plaque de renfort du côté supérieur (15) est réalisée en un matériau conducteur, et une extrémité de chaque bobine (8) est liée à cette plaque de renfort du côté supérieur (15), et l'autre extrémité de la bobine (8) est raccordée à un commutateur (12) installé autour de l'axe de rotation (4), dans une partie inférieure du porte-bobines (9).

4. Moteur sans noyau selon la revendication 1 ou 2, dans lequel:
l'aimant (5) a une magnétisation à quatre pôles agencés dans une direction radiale, et trois bobines (8) sont disposées autour de l'axe de rotation (4); et
le moteur sans noyau inclut un commutateur à six segments (12) fixés autour de l'axe de rotation (4) et deux balais (14) en contact avec le commutateur (12) dans des positions séparées par un angle de 90° par rapport au commutateur (12).

5. Moteur sans noyau selon la revendication 1 ou 2, dans lequel l'aimant (5) a une magnétisation à deux pôles agencés dans une direction radiale, et trois bobines (8) sont disposées autour de l'axe de rotation (4) ; et
le moteur sans noyau inclut un commutateur à trois segments (12) fixés autour de l'axe de rotation (4), et deux balais (17) qui sont parallèles entre eux.

6. Moteur sans noyau selon l'une quelconque des revendications précédentes, dans lequel l'aimant (5) est fixé à la périphérie externe d'un porte-aimant en forme d'anneau (6) ayant une partie cylindrique (6a) au niveau de sa partie supérieure maintenant un palier (3), la partie cylindrique (6a) étant engagée avec, et étant ajustée à un bossage (2) formé au centre du panneau supérieur (1a) du carter (1), et l'axe de rotation (4) est supporté pour une rotation par le palier (3) installé à l'intérieur de la partie cylindrique (6a).

7. Moteur sans noyau selon la revendication 6, dans lequel le porte-aimant (6) a une partie évidée (6b) sur son côté inférieur, et une partie supérieure du porte-bobines (9) est reçue dans la partie évidée (6b) du porte-aimant (6).

8. Moteur sans noyau selon l'une quelconque des revendications précédentes, dans lequel une surface interne du collier de bobine (7) est formée pour correspondre à la face latérale circonférentielle externe et aux faces supérieure/inférieure des bobines (8), et le collier de bobine (7) est formé en liant ensemble une moitié supérieure (7a) du collier de bobine (7) qui contient une moitié supérieure de chaque bobine (8), et une moitié inférieure (7b) qui contient une moitié inférieure de chaque bobine (8).

9. Moteur sans noyau selon l'une quelconque des revendications précédentes, dans lequel l'aimant (5) est constitué de quatre aimants en arc (18), aimantés individuellement dans la direction radiale, agencés selon une forme d'anneau.
